# EUROPÄISCHE PATENTANMELDUNG

(11) **EP 0 986 154 A1**
(43) Veröffentlichungstag der Anmeldung: **15.03.2000**
(21) Anmeldenummer: 99810767.6
(22) Anmeldetag: 26.08.1999
(51) Int. Cl.: H02B 13/045

(54) **Gasisoliertes Hochspannungsbauteil mit Transportabstützung**

(30) Priorität: 09.09.1998 DE 19841175
(71) Anmelder: ASEA BROWN BOVERI AG, 5400 Baden (CH)
(72) Erfinder: Vestner, Marcus, 8238 Büsingen (CH); Nohl, Andreas, 8006 Zürich (CH)
(74) Vertreter: Kaiser, Helmut, Dr.

(57) **Zusammenfassung**

Ein gasisolierter Leistungsschalter (1) besitzt eine Kapselung (2), die mit einem Schutzgas gefüllt ist. In der Kapselung (2) sind spannungsführende Teile (10, 11, 12, 13) angeordnet. Um eine Beschädigung der spannungsführenden Teile (10, 11, 12, 13) beim Transport zu verhindern, ist eine Transportabstützung (17) vorgesehen. In einer Sicherungsstellung stützt die Transportabstützung (17) die spannungsführenden Teile (10, 11, 12, 13) gegen die Kapselung (2) ab. Sie kann durch eine gasdichte Durchführung (22) teilweise herausgezogen und in eine Betriebsstellung gebracht werden, ohne dass dabei das Schutzgas evakuiert oder die Kapselung (2) geöffnet werden muss. Dies erlaubt einen sicheren Transport des Schalters und verhindert eine Verschmutzung des Innenraums (3) der Kapselung (2) und erübrigt eine aufwendige Entleerung und Neufüllung mit Schutzgas.

## Beschreibung

### Technisches Gebiet

Die Erfindung betrifft ein gasisoliertes Hochspannungsbauteil gemäss Oberbegriff von Anspruch 1.

### Stand der Technik

Bei gasisolierten Bauteilen dieser Art handelt es sich z.B. um Leistungsschalter für hohe Spannungen. Sie besitzen eine Kapselung zur Aufnahme der spannungsführenden Teile. Die Kapselung ist gasdicht und mit einem Schutzgas unter definiertem Druck gefüllt.

Die spannungsführenden Teile derartiger Anlagen sind mechanisch relativ empfindlich, was beim Transport Schwierigkeiten bereitet. Um Transportschäden zu vermeiden, kann die Kapselung geöffnet werden, so dass die spannungsführenden Teile demontiert oder verstärkt werden können. Hierzu muss jedoch das Gas abgelassen werden. Dabei kann es zu Verschmutzungen kommen. Nach einem derartigen Eingriff muss die Anlage also wieder sorgfältig geprüft werden.

### Darstellung der Erfindung

Es stellt sich deshalb die Aufgabe, ein gasisoliertes Hochspannungsbauteil der eingangs genannten Art bereitzustellen, das einfach transportiert werden kann.

Diese Aufgabe wird vom Bauteil gemäss Anspruch 1 erfüllt.

Erfindungsgemäss ist das Bauteil also mit einer Transportabstützung ausgerüstet, mit der die spannungsführenden Teile gegen die Kapselung abgestützt werden können. Dank dieser Transportabstützung können die spannungsführenden Teile höheren Beschleunigungen widerstehen. Da gleichzeitig gasdichte Betätigungsmittel vorgesehen sind um die spannungsführenden Teile freizugeben, kann die Transportabstützung gelöst werden, ohne dass das Schutzgas evakuiert oder die Kapselung geöffnet werden muss. Dadurch kann eine unerwünschte Verschmutzung des Kapselinnenraums vermieden werden.

Vorzugsweise ist an der Kapselung eine gasdichte Durchführung vorgesehen, durch welche die Transportsicherung betätigt werden kann. So kann die Transportabstützung beispielsweise einen stabförmigen Hals aufweisen, der sich verschiebbar durch die Durchführung erstreckt und somit von aussen betätigt werden kann. Auf diesem Hals kann ein Kopf angeordnet sein, der mit den spannungsführenden Teilen des Bauteils verbunden, z.B. verschraubt, werden kann.

In einer ausgezogenen Stellung der Transportsicherung kann der Hals vorzugsweise vom Kopf abgenommen werden, so dass er nicht über die Kapselung vorsteht.

### Kurze Beschreibung der Zeichnungen

Weitere bevorzugte Ausführungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch einen erfindungsgemässen Leistungsschalter,
Fig. 2 eine Teilansicht aus Fig. 1 mit der Transportsicherung in Sicherungsstellung, und
Fig. 3 die Teilansicht nach Fig. 2 mit der Transportsicherung in Betriebsstellung.

Weg zur Ausführung der Erfindung

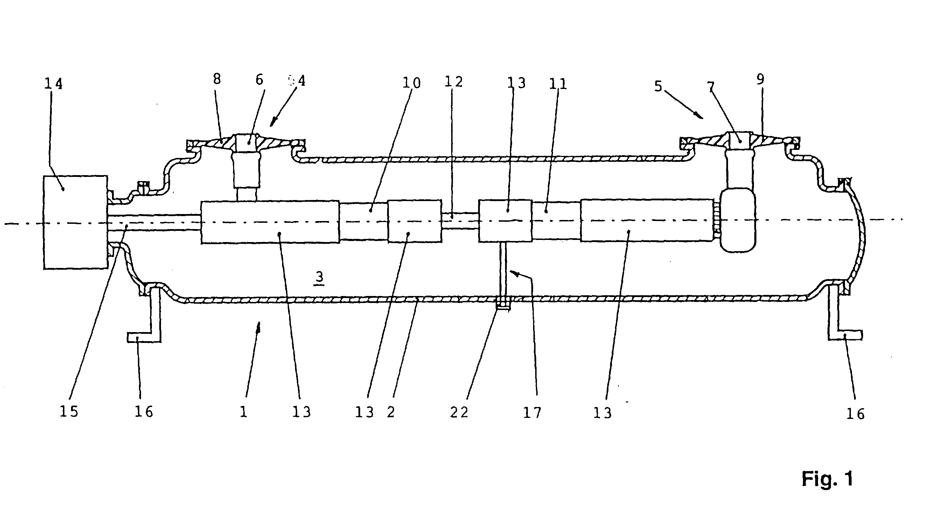

Fig. 1 zeigt einen Längsschnitt durch einen gasisolierten Leistungsschalter 1. Er besitzt eine im wesentlichen zylindrische Kapselung 2, deren Innenraum 3 mit einem Schutzgas unter vorgegebenem Druck gefüllt ist. Er weist zwei Anschlüsse 4, 5 auf, deren Elektroden 6, 7 von Stützisolatoren 8, 9 gehalten werden. Zwischen den Elektroden liegen zwei Löschkammern 10, 11, die über ein Verbindungsstück 12 verbunden sind. Die Löschkammern 10, 11 sind von Abschirmungen 13 umgeben. In den Löschkammern befinden sich die eigentlichen Schaltelemente zum Unterbrechen des Stromkreises. Die Schaltelemente werden von einem Antrieb 14 über eine Betätigungsstange 15 betätigt. Der Leistungsschalter ruht auf Füssen 16.

Die spannungsführenden Teile des Leistungsschalters 1, insbesondere die Löschkammern 10, 11, das Verbindungsstück 12 und alle Abschirmungen 13, sind mechanisch empfindlich. Zum Transport des Schalters ist deshalb eine Transportabstützung 17 vorgesehen, die die spannungsführenden Teile gegen die Kapselung 2 abstützt.

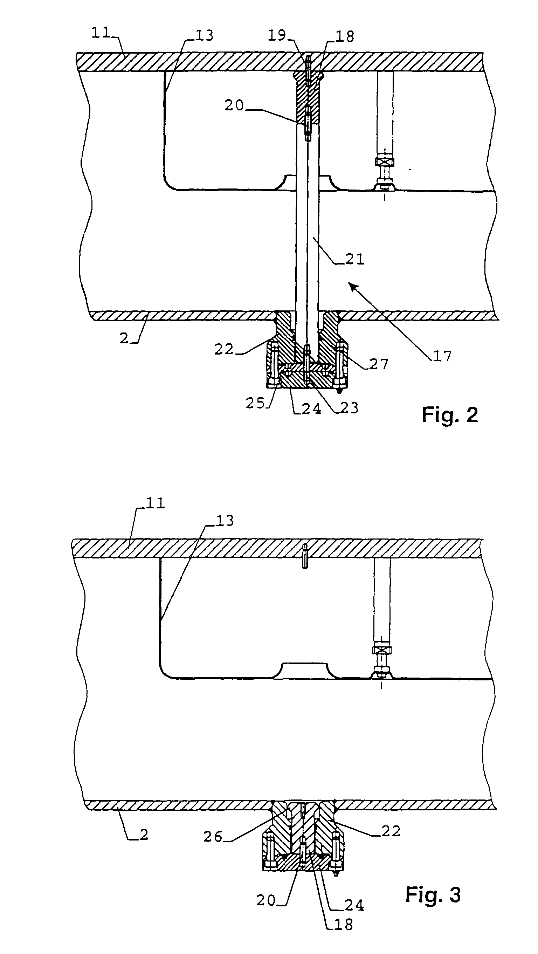

Der Aufbau der Transportabstützung 17 ist aus den Figuren 2 und 3 ersichtlich, wobei Fig. 2 die Transportabstützung in der Sicherungsstellung in Fig. 3 in der Betriebsstellung zeigt.

In der Sicherungsstellung erstreckt sich die Transportabstützung 17 von der Kapselung 2 durch eine Öffnung in der Abschirmung 13 bis zur Löschkammer 11. Sie besitzt in der vorliegenden Ausführung einen metallischen Kopf 18, der über einen ersten Gewindestift 19 mit der Löschkammer 11 verschraubt ist. An seinem äusseren Ende ist der Kopf 18 über einen zweiten Gewindestift 20 mit einem stabförmigen Hals 21 verbunden. Der Hals 21 erstreckt sich durch eine Durchführung 22, die an der Kapselung 2 angeordnet ist. Die Durchführung 22 ist mit Dichtungen 27 versehen und gasdicht. Das äussere Ende des Halses 21 ist über einen dritten Gewindestift 23 mit einem Deckel 24 verbunden, der an der Durchführung 22 festgeschraubt ist. Zwischen dem Deckel 24 und der Durchführung 22 ist eine Zwischenplatte 25 angeordnet, auf deren Funktion weiter unten eingegangen wird.

In der in Fig. 2 gezeigten Sicherungsstellung bildet die Transportabstützung 17 eine zug- und stoss-feste mechanische Verbindung zwischen der Kapselung 2 und den spannungsführenden Teilen. Sie verhindert eine Beschädigung des Schalters beim Transport. Da sie gasdicht ist, erlaubt sie es, den Schalter zu transportieren, ohne dass das Schutzgas abgelassen wird.

Um die Transportabstützung 17 zu lösen und in die in Fig. 3 gezeigte Betriebsstellung zu bringen, wird der Deckel 24 abgeschraubt. Durch Drehen der Transportabstützung wird der Kopf 18 von Gewindestift 19 losgeschraubt. Sodann kann die Transportabstützung herausgezogen werden. Die Dichtung 27 sorgt hierbei dafür, dass kein Schutzgas entweichen kann. Die Transportabstützung 17 wird soweit herausgezogen, bis der Kopf 18 sich in der in Fig. 3 gezeigten Stellung befindet. In dieser Stellung verhindert eine Wulst 26 am inneren Ende des Kopfs 19, dass der Kopf ganz aus der Durchführung 22 gleitet.

Nun wird der Hals 21 mit dem dritten Gewindestift 23 aus dem Kopf 19 herausgeschraubt. Er wird in der Betriebsstellung nicht benötigt und kann entfernt werden. Auch die Zwischenplatte 25 wird entfernt. Gewindestift 20 wird verwendet, um den Kopf 18 direkt mit dem Deckel 24 zu verbinden. Sodann wird der Deckel wieder mit der Durchführung 22 verschraubt.

In der Betriebsstellung gemäss Fig. 3 ist der Kopf 18 völlig in die Wand der Kapselung 2 zurückgezogen und ragt nicht in deren Innenraum, wodurch dielektrische Überbeanspruchung im Betrieb vermieden wird.

Das Fehlen der Zwischenplatte 25 zeigt dem Personal, dass die Transportabstützung 17 sich in der Betriebsposition befindet.

Um die Transportabstützung 17 von der Sicherungsposition in die Betriebsposition zu bringen, und auch um sie von der Betriebsposition in die Sicherungsposition zu bewegen, muss der Schalter nicht evakuiert werden und kann unter Schutzgas verbleiben, da die Betätigung durch die gasdichte Durchführung 22 erfolgt. Dies hat den Vorteil, das herstellerseitig der Schalter geprüft, sodann zum Einsatzort transportiert und dort installiert werden kann, ohne dass das Schutzgas entfernt und die Kapselung geöffnet werden muss. Dadurch können Verschmutzungen des Innenraums 3 des Schalters verhindert werden und ein aufwendiges Entleeren und Füllen entfällt.

In der gezeigten Ausführung ist die Transportabstützung 17 in der Sicherungsstellung mit einer der Löschkammern verbunden. Es ist jedoch auch denkbar, sie an einem der anderen spannungsführenden Teilen 10, 12 oder 13 zu befestigen.

In einer Ausführung der zug- und stossfesten Transportabstützung 17 ist der Hals 21 aus einem Kunststoff gefertigt, während der Gewindestift 20 aus einem Metall gefertigt ist. Diese Ausgestaltung der Materialien weist den Vorteil auf, dass bei der Demontage der Transportabstützung 17 keine metallischen Späne entstehen können, die im Innern der Kapselung 2 dielektrisch Probleme bereiten könnten.

Der Gewindestift 19 ist hier mittels eines Rechtsgewindes mit der Löschkammer 11 verschraubt, wobei diese Verschraubung gegen ein Lösen gesichert ist, beispielsweise mittels einer Verklebung. Der Gewindestift 20 ist hier mittels eines Linksgewindes in den Kopf 18 eingeschraubt, wobei diese Verschraubung ebenfalls gegen ein Lösen gesichert ist, beispielsweise mittels einer Verklebung. Der Gewindestift 23 ist mittels eines Rechtsgewindes mit dem Deckel 24 verschraubt, wobei auch diese Verschraubung gegen ein Lösen gesichert ist, beispielsweise mittels einer Verklebung.

Die Transportabstützung kann auch ohne Gewindestift 19 auskommen oder mit einem Schnapp- oder Bajonettverschluss mit den spannungsführenden Teilen verbunden werden.

Es ist auch denkbar, die Transportabstützung für andere gasisolierte Hochspannungsbauteile als einen Leistungsschalter zu verwenden, wie z.B. für Sammelschienen mit grösseren Baulängen.

### Bezugszeichenliste:

- 1:: Leistungsschalter
- 2:: Kapselung
- 3:: Innenraum der Kapselung
- 4,5:: Anschlüsse
- 6,7:: Anschlusselektroden.
- 8,9:: Stützisolatoren
- 10, 11:: Löschkammern
- 12:: Verbindungsstück
- 13:: Abschirmung
- 14:: Antrieb
- 15:: Betätigungsstange
- 16:: Füsse
- 17:: Transportabstützung
- 18:: Kopf
- 19, 20:: Gewindestift
- 21:: Hals
- 22:: Durchführung
- 23:: Gewindestift
- 24:: Deckel
- 25:: Zwischenplatte
- 26:: Wulst
- 27:: Dichtung

## Patentansprüche

1. Gasisoliertes Hochspannungsbauteil mit spannungsführenden Teilen (10 - 13) und einer die spannungsführenden Teile umgebenden, gasgefüllten Kapselung (2), dadurch gekennzeichnet, dass mindestens eine Transportabstützung (17) vorgesehen ist, mit welcher die spannungsführenden Teile (10 - 13) gegen die Kapselung (2) zug- und stossfest abstützbar sind, und dass die Transportabstützung (17) über gasdicht ausgebildete Betätigungsmittel (22 - 25) von ausserhalb der Kapselung (2) montierbar und demontierbar ist.

2. Hochspannungsbauteil nach Anspruch 1, dadurch gekennzeichnet, dass die Betätigungsmittel (22 - 25) eine gasdichte Durchführung (22) an der Kapselung (2) umfassen.

3. Hochspannungsbauteil nach Anspruch 2, dadurch gekennzeichnet, dass die Transportabstützung (17) einen stabartigen Hals (21) aufweist, der sich verschiebbar durch die Durchführung (22) erstreckt.

4. Hochspannungsbauteil nach Anspruch 3, dadurch gekennzeichnet, dass der stabartige Hals (21) der Transportabstützung (17) aus einem Kunststoff gefertigt ist.

5. Hochspannungsbauteil nach Anspruch 3 oder 4, dadurch gekennzeichnet, dass auf dem Hals (21) ein Kopf (18) angeordnet ist, welcher Befestigungsmittel (19) zur Erstellung einer Kraft übertragenden Verbindung mit den spannungsführenden Teilen (10 - 13) aufweist.

6. Hochspannungsbauteil nach Anspruch 5, dadurch gekennzeichnet, dass die Befestigungsmittel (19) mit den spannungsführenden Teilen (10 - 13) verschraubbar oder an den spannungsführenden Teilen einschnappbar sind.

7. Hochspannungsbauteil nach einem der Ansprüche 5 oder 6, dadurch gekennzeichnet, dass der Hals (21) in einer ausgezogenen Stellung der Transportabstützung (17) vom Kopf (19) abnehmbar und vom Hochspannungsbauteil entfernbar ist.

8. Hochspannungsbauteil nach einem der Ansprüche 3 - 7, dadurch gekennzeichnet, dass die Transportabstützung (17) Rückhaltemittel (26) aufweist, welche ein vollständiges Herausziehen der Transportsicherung (17) durch die Durchführung (22) verhindern.

9. Hochspannungsbauteil nach einem der vorangehenden Ansprüche, dadurch gekennzeichnet, dass die Transportabstützung (17) durch die Betätigungsmittel (22 - 25) zwischen einer Sicherungsstellung und einer Betriebsstellung hin- und herschaltbar ist, wobei sie in der Sicherungsstellung die spannungsführenden Teile (10 - 13) stützt und in der Betriebsstellung eine Innenseite der Kapselung (2) nach innen nicht überragt.
